# EUROPÄISCHE PATENTSCHRIFT

(11) **EP 2 801 665 B1**
(45) Veröffentlichungstag und Bekanntmachung des Hinweises auf die Patenterteilung: **19.10.2016**
(21) Anmeldenummer: 14166732.9
(22) Anmeldetag: 30.04.2014
(51) Int. Cl.: E01C 23/088

(54) **Straßenfräsmaschine zum Bearbeiten von Strassen- oder Bodenoberflächen, sowie Verfahren zum Lenken einer Strassenfräsmaschine**
Street milling machine for machining of road or ground surfaces, and method for steering a road milling machine
Machine à fraiser la chaussée destinée au traitement de revêtements routiers ou de sol et procédé de guidage d'une machine à fraiser la chaussée

(30) Priorität: 08.05.2013 DE 102013208484
(43) Veröffentlichungstag der Anmeldung: 12.11.2014
(73) Patentinhaber: Wirtgen GmbH, 53578 Windhagen (DE)
(72) Erfinder: Berning, Christian, 50321 Brühl (DE); Lull, Roland, 53639 Königswinter (DE); Hähn, Günter, 53639 Königswinter (DE); Thiel, Oliver, 53547 Breitscheid (DE); Barimani, Cyrus, 53639 Königswinter (DE)
(74) Vertreter: dompatent von Kreisler Selting Werner - Partnerschaft von Patent- und Rechtsanwälten mbB

(56) Entgegenhaltungen:
- EP-A1- 0 836 659
- WO-A1-98/47756

## Beschreibung

Die Erfindung betrifft eine Straßenfräsmaschine zum Bearbeiten von Straßen- oder Bodenoberflächen nach dem Oberbegriff des Anspruchs 1, sowie ein Verfahren zum Lenken von Rädern oder Kettenlaufwerken einer Straßenfräsmaschine nach dem Oberbegriff des Anspruchs 15.

Derartige Straßenfräsmaschinen sind beispielsweise aus der EP 0 836 659 bekannt.

Bei derartigen Straßenbaumaschinen, insbesondere Kleinfräsen, kommt es in hohem Maße auf eine gute Manövrierbarkeit der Straßenfräsmaschine an. Beispielsweise soll eine derartige Straßenfräsmaschine nicht nur für Geradeausfahrt und normale Kurvenfahrt geeignet sein, sondern auch engen Kurvenverläufen folgen können, z. B. um Verkehrsinseln herum oder um einen Kanaldeckel herum.

Daher schließt bei den bekannten Kleinfräsen die Fräswalze nahezu bündig mit einer Außenseite des Maschinenrahmens, der sogenannten Nullseite ab. Aufgrund dieser Anordnung ist es möglich, sehr nah an Hindernissen entlang zu fräsen. Auch ist es zu diesem Zweck bereits bekannt, das auf der Nullseite befindliche hintere Rad von einer äußeren Endposition in eine innere Endposition vor die Fräswalze relativ zur Nullseite nach innen zu verschwenken.

Der Möglichkeit auf dieser Nullseite sehr engen Kurvenverläufen zu folgen, kommt besondere Bedeutung zu, da somit um sehr kleine Hindernisse herum sehr genaue Fräsarbeiten ausgeführt werden können. Deshalb ist es bei derartigen Straßenfräsmaschinen bereits bekannt, die Lenkwinkel für eine Kurvenfahrt relativ zu dieser Nullseite nach innen bzw. nach außen unterschiedlich groß zu gestalten, insbesondere den Lenkwinkel für eine Kurvenfahrt nach außen besonders groß zu gestalten.

Es versteht sich, dass wenn die Manövrierfähigkeit verbessert wird, die Einsatzmöglichkeiten und die Wirtschaftlichkeit einer derartigen Straßenfräsmaschine verbessert werden können.

Aus der WO 98/47756 ist eine Lenkeinrichtung für ein Nutzfahrzeug, insbesondere einen landwirtschaftlichen Traktor bekannt, bei dem eine in Draufsicht T-förmige Vorderachse um ein in Fahrtrichtung zurückversetztes Kugelgelenk verschwenkt werden kann. Bei der bekannten konstruktiven Lösung ergeben sich entgegen den Anforderungen bei einer Straßenfräsmaschine mit einer Nullseite für ein Lenken nach links oder nach rechts symmetrische Bedingungen.

Der Erfindung liegt daher die Aufgabe zugrunde, die Manövrierfähigkeit für eine Straßenfräsmaschine, insbesondere für eine Kleinfräse, zu verbessern.

Zur Lösung dieser Aufgabe dienen die Merkmale des Anspruchs 1 bzw. 15.

Es ist erfindungsgemäß vorgesehen, dass die Räder oder Kettenlaufwerke der Vorderachse in Fahrtrichtung derart versetzt zueinander angeordnet sind, dass das in Lenkrichtung auf der inneren Seite befindliche Rad oder das auf der Nullseite befindliche Rad oder Kettenlaufwerk in Fahrtrichtung vor dem benachbarten Rad oder Kettenlaufwerk angeordnet ist.

Die versetzte Anordnung der Räder bzw. der Kettenlaufwerke hat den Vorteil, dass die Lenkgeometrie aufgrund des Versatzes die Einstellung größerer maximaler Lenkwinkel ermöglicht, so dass ein engerer Kurvenradius gefahren werden kann. Eine Verbesserung ist insbesondere bei einer Kurvenfahrt, auf der sich die Nullseite auf der Innenseite befindet, von großem Vorteil.

Letztlich ermöglicht der Versatz der Vorderräder eine Angleichung der Kurvenradien beider vorderen Räder bei gleichzeitiger Verringerung des Abstandes des momentanen Drehungspunktes von der Stirnseite der Fräswalze auf der Nullseite. Bei einer Angleichung der Kurvenradien für beide vorderen Räder ist eine genauere Kurvenfahrt möglich und durch die Verkürzung des Drehungszentrums zur z.B. nullseitigen Stirnseite der Fräswalze können engste Kurvenradien bis zu 130 mm Kurvenradius und weniger erreicht werden. Insofern kann sich die Straßenfräsmaschine praktisch auf der Stelle drehen.

Die Erfindung ermöglicht es auch im Falle einer notwendigen Verlängerung des Radstandes eine bessere Manövrierfähigkeit der Straßenfräsmaschine als zuvor zu erreichen.

Eine Verlängerung des Radstandes kann unter anderem aufgrund der Verwendung neuer und aufwändigerer Motorentechnologie, oder der Integration von zusätzlichen Komponenten, wie zum Beispiel zur Abgasnachbehandlung notwendig werden. Diese Komponenten benötigen zusätzlichen Bauraum, sind aber notwendig, um Emissionsrichtlinien zu genügen.

Vorzugsweise ist vorgesehen, dass der Versatz in Fahrtrichtung zwischen den Schwenkachsen der Vorderachse zwischen 50 mm und 350 mm, vorzugsweise zwischen 100 mm und 250 mm, beträgt. Ein derartiger Versatz der Anordnung der Schwenkachsen der Räder oder Kettenlaufwerke an der Vorderachse erlaubt eine erhebliche Erhöhung der maximalen Lenkwinkel.

Die Lenkhebel können in Relation zur Fahrtrichtung unter unterschiedlichen Winkelstellungen an den Schwenksäulen angeordnet sein, derart, dass sich für eine Lenkrichtung nach rechts oder links unterschiedliche maximale Lenkwinkel ergeben.

Vorzugsweise ist vorgesehen, dass der Lenkwinkel nach außen für das auf der Nullseite befindliche Rad oder Kettenlaufwerk bis zu einem maximalen Lenkwinkel von über 70°, vorzugsweise zwischen 70° und 90°, einstellbar ist.

Bei einem bevorzugten Ausführungsbeispiel ist vorgesehen, dass der Versatz der Räder oder Kettenlaufwerke der Vorderachse derart gewählt ist, dass die Räder oder Kettenlaufwerke in der Lenkrichtung relativ zur Nullseite nach außen, insbesondere bei maximalem Lenkeinschlag, beide in einer Spur laufen.

Dies hat den Vorteil, dass die Straßenfräsmaschine auf der Stelle, d.h. im Wesentlichen um das momentanen Drehungszentrum in Form einer im wesentlichen orthogonal auf dem Boden stehenden Drehungsachse gedreht werden kann, so dass äußerst enge Kurvenradien gefräst werden können.

Bei einer Lenkung, bei der sich die Nullseite der Straßenfräsmaschine auf der Innenseite befindet, ist vorgesehen, dass die Radkonsolen über ein Verbindungsteil derart gekoppelt sind, dass das Drehungszentrum beider vorderer Räder oder Kettenlaufwerke in der vertikalen Ebene durch die Hinterachse oder deren Verlängerung im Bereich des hinteren Rades oder Kettenlaufwerkes möglichst nahe an der Nullseite angeordnet ist.

Da die Fräswalzenachse in der gleichen vertikalen Ebene liegt wie die Hinterachse der hinteren Räder oder Kettenlaufwerke, ermöglicht dies das Fräsen mit der nullseitigen Stirnfläche der Fräswalze von engen Kurvenradien z.B. um Kanaldeckel herum.

Vorzugsweise ist vorgesehen, dass Radkonsolen über das Verbindungsteil derart gekoppelt sind, dass das Drehungszentrum bei einer Lenkung relativ zur Nullseite nach außen einen Abstand von der äußeren Stirnseite der Fräswalze von weniger als 250 mm, vorzugsweise weniger als 150 mm, aufweist.

Bei einer Kurvenfahrt, bei der die Nullseite außen verläuft, ist vorgesehen, dass die Radkonsolen über das Verbindungsteil derart gekoppelt sind, dass bei einer Lenkung relativ zur Nullseite nach innen das Drehungszentrum beider vorderen Räder oder Kettenlaufwerke auf der Verlängerung der Hinterachse einen Abstand von der inneren Stirnkante der Fräswalze aufweist, der geringer ist als der Radstand, vorzugsweise geringer als 2000 mm.

Bei einem besonders bevorzugten Ausführungsbeispiel ist vorgesehen, dass das Verbindungsteil gemeinsam mit einem von dem Verbindungsteil abstehenden Arm einen Lenkanker bildet, dessen Arm mit dem freien Ende mindestens eines Lenkzylinders gekoppelt ist.

Eine derartige Gestaltung des Verbindungsteils ermöglicht ebenfalls eine Vergrößerung des einstellbaren maximalen Lenkwinkels.

Dabei ist vorgesehen, dass sich der Arm des Lenkankers zwischen den Schwenksäulen der Räder oder Kettenlaufwerke von dem Verbindungsteil weg erstreckt, wobei das Verbindungsteil und der Lenkzylinder in Fahrtrichtung gesehen auf gegenüberliegenden Seiten relativ zu einer gedachten Verbindungslinie der Schwenkachsen angeordnet sind.

Vorzugsweise ist vorgesehen, dass die Räder oder Kettenlaufwerke zwischen zwei Endpositionen für eine Fahrtrichtung nach links bzw. rechts lenkbar sind, wobei das Verbindungsteil gebogene Abschnitte oder Aussparungen aufweist, derart dass das Verbindungsteil in den Endpositionen einen Abstand von der jeweiligen Schwenkachse einhält, der größer ist als der Radius der jeweiligen Schwenksäule.

Bei einer bevorzugten Ausführungsform steht der Arm des Lenkankers mittig von dem Verbindungsteil ab. Die zunächst mittige Anordnung des Arms hat den Vorteil, dass für einen größeren Bereich eine Kollisionsfreiheit relativ zu den Schwenksäulen ermöglicht wird. In Fahrtrichtung vor dem Bereich der Schwenksäulen kann der Arm gebogen oder abgewinkelt gestaltet sein.

Die Schwenksäulen der Vorderachse können in einem Querträger gelagert sein.

Der Festpunkt des Lenkzylinders ist vorzugsweise an dem Maschinenrahmen oder an dem Querträger angeordnet.

Bei einer bevorzugten Ausführungsform kann der Querträger relativ zu dem Maschinenrahmen um eine in Fahrtrichtung verlaufende Pendelachse schwenkbar sein. Auf diese Weise können die Räder oder Kettenlaufwerke der Vorderachse auch auf unterschiedlichen Ebenen laufen.

Bei einem weiteren Ausführungsbeispiel kann vorgesehen sein, dass der Querträger um eine vertikale Achse schwenkbar ist. Dies ermöglicht es den Versatz der vorderen Räder wahlweise auf der Nullseite oder auf der der Nullseite gegenüberliegenden Seite vorzusehen, so dass jeweils das in Lenkrichtung innenseitige Rad vor dem benachbarten Rad angeordnet werden kann. Auf diese Weise kann erreicht werden, dass auch bei einer Lenkrichtung relativ zur Nullseite nach innen die Kurvenradien der vorderen Räder aneinander angeglichen werden, wodurch der Abstand zwischen der der Nullseite abgewandten Stirnseite der Fräswalze und dem Drehungszentrum ebenfalls weiter verkürzt werden kann.

Vorzugsweise ist vorgesehen, dass das auf der Nullseite befindliche hintere Rad von einer äußeren Endposition, in der sich das Rad jenseits der Nullseite befindet und die Hinterachsen beider hinterer Räder miteinander fluchten, in eine innere Endposition vor die Fräswalze relativ zur Nullseite nach innen schwenkbar ist.

Es kann vorgesehen sein, dass zumindest das auf der Nullseite befindliche hintere Rad lenkbar ist.

Die Lenkbarkeit ggf. beider hinterer Räder, aber zumindest des auf der Nullseite befindlichen hinteren Rades, verbessert ebenfalls die Manövrierbarkeit der Straßenfräsmaschine. Sie ist besonders vorteilhaft, wenn Kettenlaufwerke zum Einsatz kommen.

Im Folgenden werden unter Bezugnahme auf die Zeichnungen Ausführungsbeispiele der Erfindung näher erläutert.

Es zeigen:
- Fig. 1: eine gattungsgemäße Straßenfräsmaschine nach dem Stand der Technik,
- Fig. 2: eine Draufsicht auf die Straßenfräsmaschine der Fig. 1,
- Fig. 3: eine schematische Darstellung der Lenkwinkel bei einer Straßenfräsmaschine gemäß Fig. 1,
- Fig. 4: eine schematische Darstellung der einstellbaren Lenkwinkel bei einem ersten Ausführungsbeispiel der Erfindung,
- Fig. 5: eine schematische Darstellung der einstellbaren Lenkwinkel bei einem weiteren Ausführungsbeispiel der Erfindung,
- Fig. 6: eine Draufsicht auf ein Ausführungsbeispiel eines Lenkankers, und
- Fig. 7: eine Seitenansicht der Vorderachse.

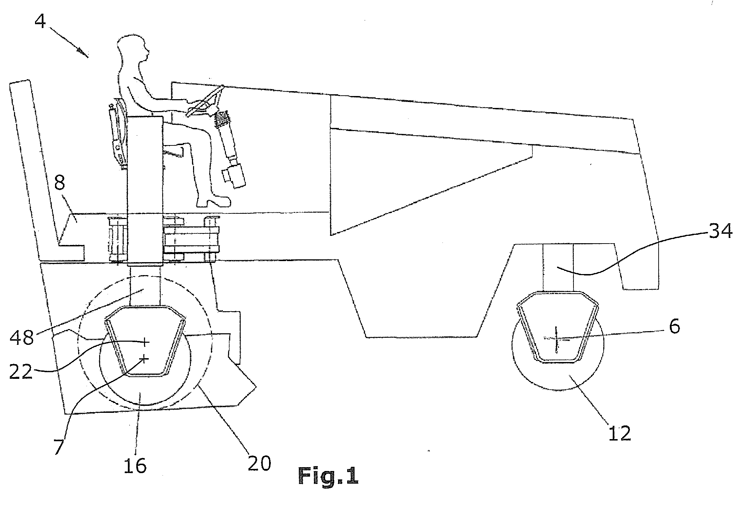

Fig. 1 zeigt eine Straßenfräsmaschine zum Abfräsen von Fahrbahnen mit einem selbstfahrenden Fahrwerk bestehend aus einer lenkbaren Vorderachse 6 mit zwei vorderen Rädern 10, 12 und zwei voneinander unabhängigen hinteren Rädern 14, 16. Es versteht sich, dass die Räder 10 bis 16 vollständig oder teilweise durch Kettenlaufwerke ersetzt werden können.

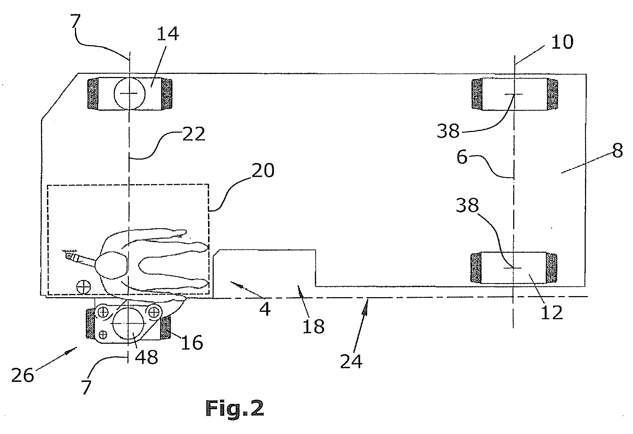

Das Fahrwerk trägt einen Maschinenrahmen 8, auf dem sich ein Fahrerstand 4 auf der sogenannten Nullseite 24 der Straßenbaumaschine gemäß Fig. 2 befindet. Die hinteren Räder 14, 16 sind mit Hilfe von Hubsäulen 48 höhenverstellbar, um damit die Arbeitstiefe einer Fräswalze 20 einstellen zu können.

Die Fräswalze 20 ist mit der nullseitigen Stirnseite nahezu bündig mit der Nullseite 24 des Maschinenrahmens, so dass auf der Nullseite 24 der Straßenfräsmaschine ein kantennahes Arbeiten möglich ist. Hierzu wird das Rad 16 aus einer äußeren Endposition 26 jenseits der Nullseitenebene nach innen in eine Aussparung 18 des Maschinenrahmens 8 eingeschwenkt, so dass die Außenkante des Rades 16 bündig mit der Nullseite 24 abschließen kann oder sogar relativ zur Nullseite 24 eine Endposition weiter innen einnehmen kann. Das hintere Rad 16 oder beide hinteren Rader 14, 16 können lenkbar sein.

Die Fräswalzenachse 22 verläuft, wie am besten aus Fig. 1 ersichtlich, in der gleichen vertikalen Ebene, wie die Achsen 7 des Rades 14 und des Rades 16 in der äußeren Endposition 26.

Der Eingriffskreis der Fräswalze 20 endet in der Nähe des hinteren Endes des Maschinenrahmens 8, so dass bis in Ecken kantennah gefräst werden kann.

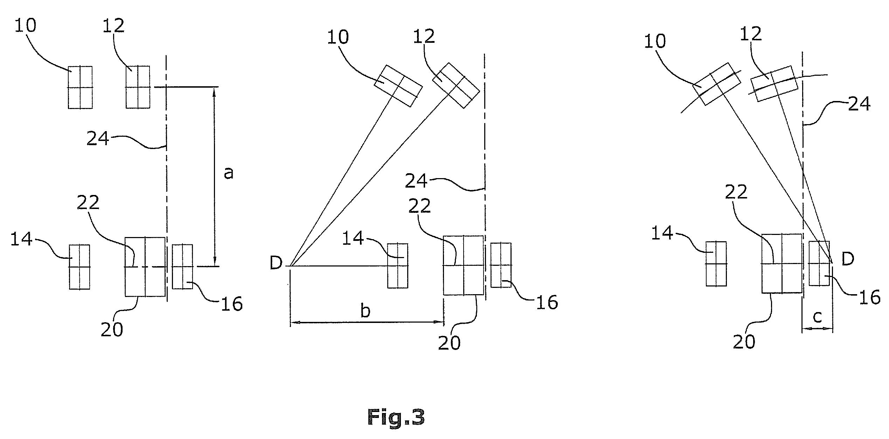

Die Fig. 3 zeigt ein Ausführungsbeispiel aus dem Stand der Technik mit den für den Fräsbetrieb relevanten geometrischen Abständen. In der linken Abbildung der Fig. 3 ist der Radstand "a" der Straßenfräsmaschine anzeigt. In der mittleren Abbildung ist als für den Fräsbetrieb relevante Größe der Abstand "b" des Drehungszentrums "D" von der der Nullseite abgewandten Stirnseite der Fräswalze 20 bei maximalem Lenkwinkel nach links gezeigt.

Die rechte Abbildung der Fig. 3 zeigt die gleiche Situation bei maximalem Lenkwinkel nach rechts, bei der die Nullseite 24 auf der kurveninneren Seite liegt. Hier ist nicht nur der maximal einstellbare Lenkwinkel der vorderen Räder 10, 12 von großer Bedeutung, sondern auch der Abstand "c" vom Drehungszentrum D zur nullseitigen Stirnseite der Fräswalze 20. Es versteht sich, dass bei einem kleineren Abstand "c" engere Kurvenradien gefräst werden können. Desweiteren ist auch die Verkürzung des Abstandes "b" oder eine ggf. notwendige Vergrößerung des Radstandes "a" bei gleichzeitiger Verkleinerung der Abstände "b" und "c" wünschenswert.

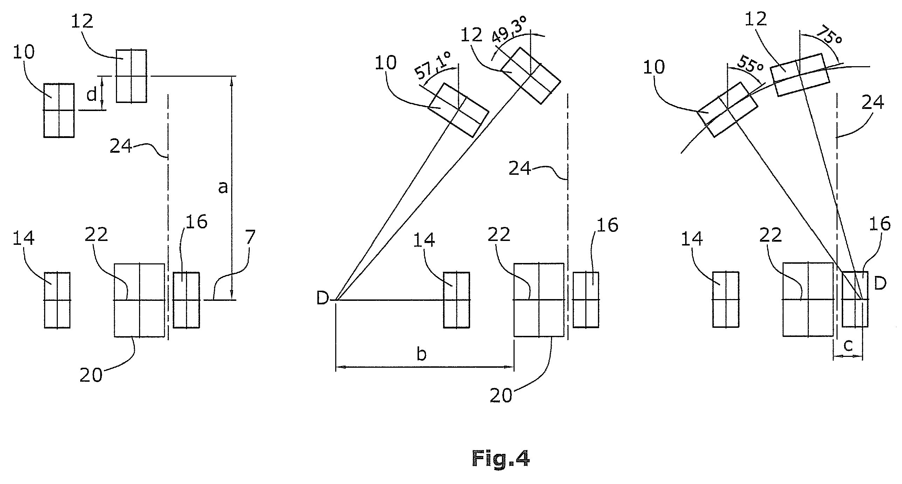

Fig. 4 zeigt nun ein erstes Ausführungsbeispiel der Erfindung, wonach die vorderen Räder 10, 12 zueinander versetzt angeordnet sind. Bei dem rechten vorderen Rad 12 ist der Radstand "a" beibehalten, während das linke vordere Rad 10 um einen Versatz "d" zurückversetzt ist. Der Versatz "d" kann beispielsweise in einem Bereich zwischen 50 mm bis 250 mm, vorzugsweise zwischen 100 mm bis 200 mm, liegen.

Dieser Versatz hat zunächst den aus der mittleren Abbildung der Fig. 4 ersichtlichen Vorteil, dass der Lenkwinkel des rechten vorderen Rades 12 vergrößert werden kann, wodurch der Abstand "b" zwischen dem Drehungszentrum und der der Nullseite 24 abgewandten Stirnseite der Fräswalze 20 erheblich verkürzt werden kann, so dass auch die Manövrierbarkeit der Straßenfräsmaschine relativ zur Nullseite 24 nach innen verbessert wird.

In der rechten Abbildung der Fig. 4 ist erkennbar, dass der maximale Lenkwinkel auf beispielsweise 75° aufgrund der versetzten Anordnung der vorderen Räder 10, 12 vergrößert werden kann, wodurch der Abstand "c" des Drehungszentrums "D" zu der nullseitigen Stirnfläche der Fräswalze 20 erheblich, d.h. um ca. 20 % gegenüber Fig. 3, verringert werden kann.

Bei einem um eine vertikale Achse schwenkbarem Querträger können die hier dargestellten Vorteile des Radversatzes sinngemäß auf der der Nullseite gegenüberliegenden Seite erreicht werden.

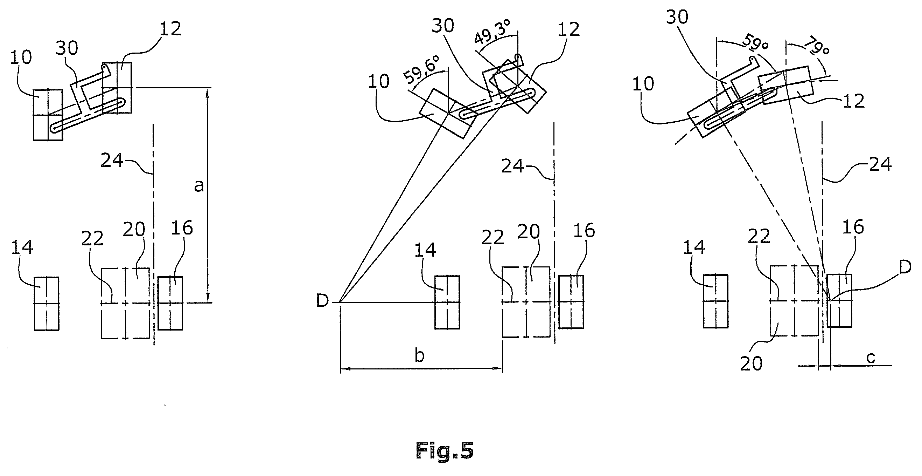

Fig. 5 zeigt zusätzlich zum Versatz "d" der vorderen Räder 10, 12 die Anwendung eines Lenkankers 30, der, wie aus der mittleren Abbildung der Fig. 5 hervorgeht, zumindest bezüglich des linken Rades 10 einen größeren Lenkwinkel zulässt, so dass der Abstand "b" gegenüber Fig. 4 weiter verringert werden kann.

Bei einer Lenkung nach rechts können an beiden vorderen Rädern 10, 12 die Lenkwinkel weiter vergrößert werden, so dass der Abstand "c" um ca. 65 % gegenüber Fig. 3 verringert werden kann, wodurch extrem kleine Kurvenradien bei einer Lenkung relativ zur Nullseite nach rechts fräsbar sind. Der Abstand "c" erreicht eine Größe von unter 150 mm. Für "b" ist ein Wert von beispielsweise ca. 1700 mm erreichbar.

Ein weiterer Vorteil der Ausführungsformen gemäß Fig. 4 und 5 ist, dass die vorderen Räder 10, 12 bei maximalem Lenkeinschlag auf einem in etwa gleichartigen Radius gefahren werden können, so dass die Räder 10, 12 im Wesentlichen auf der gleichen Spur fahren.

Dies ermöglicht eine genauere Kurvenfahrt. Die Kurvenfahrt in der im wesentlichen gleichen Spur wird genauer, weil die Drehungszentren für beide Spuren der Räder 10, 12 enger beieinander liegen und idealerweise zusammenfallen. Wenn demzufolge die Straßenfräsmaschine um ein im wesentliches einheitliches Drehungszentrum gelenkt werden kann, kommt es nicht zu einer Kurvenfahrt mit wechselnden Kurvenradien je nachdem welches Rad einen besseren Kraftschluss mit dem Boden aufweist

Es sind maximale Lenkwinkel von über 70°, vorzugsweise zwischen 70° und 90°, einstellbar.

In dem Ausführungsbeispiel der Fig. 4 sind Lenkwinkel für die vorderen Räder 10, 12 zwischen 55° und 75° gezeigt und in dem Ausführungsbeispiel der Fig. 5 sind Lenkwinkel der vorderen Räder zwischen 59° und 79° ersichtlich.

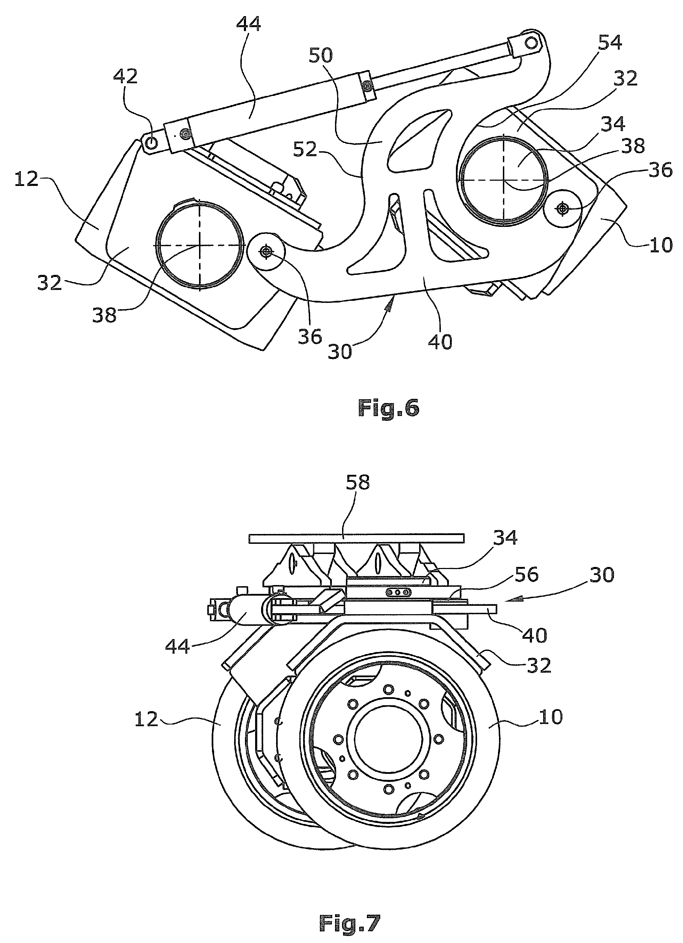

Fig. 6 zeigt einen Lenkanker 30 mit einem Verbindungsteil 40, das die Lenkhebel 36 beider vorderen Räder 10, 12 miteinander gelenkig verbindet. Von diesem Verbindungsteil 40 steht ein Arm 50 zunächst im Wesentlichen mittig und vorzugsweise orthogonal zu dem Verbindungsteil 40 ab.

Die Radkonsolen 32 sind jeweils mit Schwenksäulen 34 verbunden, die um jeweils eine Schwenkachse 38 in einem Querträger 56 schwenkbar gelagert sind.

Bei einer alternativen Ausführungsform mit höhenverstellbaren Rädern 10, 12 der Vorderachse können die Schwenksäulen 34 als Hubsäulen 48 gestaltet sein. Die Lenkhebel 36 sind dann an Lenkringen befestigt, die bei einer Höhenverstellung über eine Längsnut in der Hubsäule 48 eine Lenkbewegung um die Schwenkachse 38 ermöglichen.

Alternativ können daher die Schwenksäulen 34 aus Hubsäulen 48 gebildet sein, wenn der Maschinenrahmen an den vorderen Rädern 10, 12 höhenverstellbar sein soll. In diesem Fall kann der Querträger 56 entfallen.

Die Lenkhebel 36 sind fest mit den Radkonsolen 32 verbunden.

Der im Wesentlichen orthogonal von dem Verbindungsteil 40 abstehende Arm 50 weist auf den den Schwenksäulen 34 zugewandten Seiten eine gebogene Kontur 52, 54 auf, die dem Durchmesser der Schwenksäulen 34 angepasst ist, um kollisionsfrei maximale Lenkwinkel einstellen zu können.

Oberhalb einer gedachten Verbindungslinie zwischen den Schwenkachsen 38 der Schwenksäulen kann der Arm 50 abgewinkelt oder gebogen sein, um an seinem freien Ende mit einem Lenkzylinder 44 verbunden zu sein, der die zum Lenken erforderliche Kraft auf den Lenkanker 30 überträgt. Der Lenkzylinder 44 ist seinerseits an einem Festpunkt 42 relativ zum Maschinenrahmen 4 angelenkt.

Fig. 7 zeigt eine Seitenansicht der Vorderachse mit zueinander versetzten Rädern 10, 12, deren Schwenksäulen 34 in dem Querträger 56 gelagert sind.

Der Querträger 56 ist an einer am Maschinenrahmen 8 befestigten Platte 58 derart angelenkt, dass der Querträger 56 relativ zu dem Maschinenrahmen 8 um eine in Fahrtrichtung verlaufende Pendelachse schwenkbar sein kann.

Bei einer alternativen Ausführungsform kann auch vorgesehen sein, dass der Querträger 56 um eine vertikale zu den Schwenkachsen 38 parallele Achse derart schwenkbar ist, dass der Versatz "d" wahlweise in Fahrtrichtung links oder rechts vorgesehen werden kann, so dass jeweils das in Lenkrichtung innenseitige Rad 10 oder 12 in Fahrtrichtung vor dem benachbarten Rad angeordnet werden kann.

## Patentansprüche

1. Straßenfräsmaschine zum Bearbeiten von Straßen- oder Bodenoberflächen,
- mit einem von einem Fahrwerk getragenen Maschinenrahmen (8) mit einer Vorder- und einer Hinterachse (6,7) mit Rädern (10, 12, 14, 16) oder Kettenlaufwerken,
- mit einem am Maschinenrahmen (8), zwischen den hinteren Rädern (14, 16) oder Kettenlaufwerken, drehbar gelagerten Fräswalze (20), wobei die Fräswalze (20) mit einer Stirnseite nahezu bündig mit einer seitlichen Außenseite des Maschinenrahmens (8), der sogenannten Nullseite (24), abschließt, um ein möglichst nahes Fräsen entlang von Hindernissen zu ermöglichen,
- wobei zumindest die Räder (14, 16) oder Kettenlaufwerke der Hinterachse (7) Radkonsolen mit Hubsäulen (48) aufweisen, die mit Hilfe von Hydraulikzylindern zur Einstellung der Frästiefe relativ zum Maschinenrahmen (8) in der Höhe einstellbar sind,
- wobei zumindest die Räder (10, 12) oder Kettenlaufwerke der Vorderachse (6) Radkonsolen (32) mit Schwenksäulen (34) aufweisen, die mit Hilfe von Lenkhebeln (36) um eine Schwenkachse (38) lenkbar sind,
- wobei die Lenkhebel (36) der Räder (10, 12, 14, 16) oder Kettenlaufwerke der Vorderachse (6) über ein starres Verbindungsteil (40) zur synchronen Verstellung der Lenkwinkel gelenkig miteinander gekoppelt sind, und
- wobei mindestens ein an einem Festpunkt (42) relativ zum Maschinenrahmen (8) direkt oder indirekt angelenkter und mit mindestens einer Radkonsole (32) mittelbar oder unmittelbar gekoppelter Lenkzylinder (44) den Lenkwinkel der Räder (10, 12) oder Kettenlaufwerke einstellt,
**dadurch gekennzeichnet, dass**
die Räder (10, 12) oder Kettenlaufwerke der Vorderachse (6) in Fahrtrichtung derart versetzt zueinander angeordnet sind, dass das in Lenkrichtung innenseitige Rad (10,12) bzw. Kettenlaufwerk oder das auf der Nullseite (24) befindliche Rad (12) oder Kettenlaufwerk (6) in Fahrtrichtung vor dem benachbarten Rad (10) bzw. Kettenlaufwerk angeordnet ist.

2. Vorrichtung nach Anspruch 1, **dadurch gekennzeichnet, dass** der Versatz d in Fahrtrichtung zwischen den Schwenkachsen (38) der Vorderachse (6) zwischen 50 mm und 350 mm, vorzugsweise zwischen 100 mm und 250 mm, beträgt.

3. Vorrichtung nach einem der Ansprüche 1 oder 2, **dadurch gekennzeichnet, dass** die Lenkhebel (36) in Relation zur Fahrtrichtung unter unterschiedlichen Winkelstellungen an den Schwenksäulen (34) angeordnet sind, derart dass sich für eine Lenkrichtung nach rechts oder links unterschiedliche maximale Lenkwinkel ergeben.

4. Vorrichtung nach einem der Ansprüche 1 bis 3, **dadurch gekennzeichnet, dass** der Lenkwinkel nach außen für das auf der Nullseite (24) befindliche Rad (12) oder Kettenlaufwerk bis zu einem maximalen Lenkwinkel von über 70°, vorzugsweise zwischen 70° und 90°, einstellbar ist.

5. Vorrichtung nach einem der Ansprüche 1 bis 4, **dadurch gekennzeichnet, dass** der Versatz (d) der Räder (10,12) oder Kettenlaufwerke der Vorderachse (6) derart gewählt ist, dass die Räder (10,12) oder Kettenlaufwerke bei maximalem Lenkeinschlag in einer Lenkrichtung relativ zur Nullseite (24) nach außen hin beide im Wesentlichen in einer Spur laufen.

6. Vorrichtung nach Anspruch 1 bis 5, **dadurch gekennzeichnet, dass** die Radkonsolen (32) über das Verbindungsteil (40) derart gekoppelt sind, dass bei einer Lenkung relativ zur Nullseite (24) nach außen das Drehungszentrum (D) beider vorderen Räder (10,12) oder Kettenlaufwerke in der vertikalen Ebene durch die Hinterachse (7) oder deren Verlängerung im Bereich des hinteren Rades (16) oder Kettenlaufwerkes nahe der Nullseite angeordnet ist.

7. Vorrichtung nach Anspruch 6, **dadurch gekennzeichnet, dass** die Radkonsolen über das Verbindungsteil (40) derart gekoppelt sind, dass das Drehungszentrum (D) bei einer Lenkung relativ zur Nullseite (24) nach außen einen Abstand (c) von der nullseitigen Stirnseite der Fräswalze (20) von weniger als 250 mm, vorzugsweise weniger als 150 mm, aufweist.

8. Vorrichtung nach einem der Ansprüche 1 bis 7, **dadurch gekennzeichnet, dass** die Radkonsolen (32) über das Verbindungsteil (40) derart gekoppelt sind, dass bei einer Lenkung relativ zur Nullseite (24) nach innen das Drehungszentrum (D) beider vorderen Räder (10,12) oder Kettenlaufwerke auf der Verlängerung der Hinterachse einen Abstand (b) von der inneren Stirnkante der Fräswalze (20) aufweist, der geringer ist als der Radstand a, vorzugsweise geringer als 2000 mm.

9. Vorrichtung nach einem der Ansprüche 1 bis 8, **dadurch gekennzeichnet, dass** das Verbindungsteil (40) gemeinsam mit einem von dem Verbindungsteil (40) abstehenden Arm (50) einen Lenkanker (30) bildet, dessen Arm (50) mit dem freien Ende des mindestens einen Lenkzylinders (44) gekoppelt ist.

10. Vorrichtung nach Anspruch 9, **dadurch gekennzeichnet, dass** sich der Arm (50) des Lenkankers (30) zwischen den Schwenksäulen (34) der Räder (10,12) oder Kettenlaufwerke von dem Verbindungsteil (40) weg erstreckt, wobei das Verbindungsteil (40) und der Lenkzylinder (44) in Fahrtrichtung gesehen auf gegenüberliegenden Seiten relativ zu der Verbindungslinie der Schwenkachsen (38) angeordnet sind.

11. Vorrichtung nach Anspruch 10, **dadurch gekennzeichnet, dass** die Räder (10, 12) oder Kettenlaufwerke zwischen zwei Endpositionen für eine Fahrtrichtung nach links bzw. rechts lenkbar sind, wobei der Arm des Verbindungsteils (40) gebogene Abschnitte oder Aussparungen (52, 54) aufweist, derart dass das Verbindungsteil (40) in den Endpositionen einen Abstand von der jeweiligen Schwenkachse (38) einhält, der größer ist als der Radius der jeweiligen Schwenksäule (34).

12. Vorrichtung nach einem der Ansprüche 1 bis 11, **dadurch gekennzeichnet, dass** die Schwenksäulen (34) zumindest der Vorderachse (6) in einem Querträger (56) gelagert sind oder die Schwenksäulen (34) aus Hubsäulen gebildet sind.

13. Vorrichtung nach Anspruch 12, **dadurch gekennzeichnet, dass** der Querträger (56) relativ zu dem Maschinenrahmen (8) um eine in Fahrtrichtung verlaufende Pendelachse schwenkbar ist.

14. Vorrichtung nach einem der Ansprüche 1 bis 13, **dadurch gekennzeichnet, dass** das auf der Nullseite (24) befindliche hintere Rad (16) oder Kettenlaufwerk von einer äußeren Endposition (26), in der sich das Rad (16) jenseits der Nullseite (24) befindet und die Hinterachsen (7) beider hinterer Räder (14,16) im Wesentlichen miteinander fluchten, in eine innere Endposition vor die Fräswalze (20) und relativ zur Nullseite (24) nach innen schwenkbar ist.

15. Verfahren zum Lenken von Rädern (10, 12) oder Kettenlaufwerken einer Straßenfräsmaschine zum Bearbeiten von Straßen- oder Bodenoberflächen,
bei denen die Räder (10, 12) oder Kettenlaufwerke mit Radkonsolen (32) und Schwenksäulen (34) mit Hilfe von Lenkhebeln (36) von mindestens einem Lenkzylinder (44) um eine Schwenkachse (38) verschwenkt werden und Radkonsolen (32) benachbarter Stützräder (10, 12) oder Kettenlaufwerke zur synchronen Verstellung der Lenkwinkel gelenkig miteinander gekoppelt werden,
**gekennzeichnet durch**
die versetzte Anordnung der Räder (10, 12) oder Kettenlaufwerke der Vorderachse (6) in Fahrtrichtung derart, dass das in Lenkrichtung innenseitige Rad (10; 12) bzw. Kettenlaufwerk oder das auf der Nullseite (24) befindliche Rad (12) bzw. Kettenlaufwerk der Vorderachse (6) in Fahrtrichtung vor dem benachbarten Rad (10) oder Kettenlaufwerk der Vorderachse (6) angeordnet wird.

## Claims

1. Road milling machine for working road or ground surfaces,
- with a machine frame (8) supported by a chassis with one front axle and one rear axle (6, 7) with wheels (10, 12, 14, 16) or crawler tracks,
- with a milling drum (20) mounted at the machine frame (8) to rotate between the rear wheels (14, 16) or crawler tracks, where said milling drum (20), with one front end, ends nearly flush with a lateral outer side of the machine frame (8), the so-called zero-clearance side (24), in order to enable milling as close along any obstacles as possible,
- where, as a minimum, the wheels (14, 16) or crawler tracks of the rear axle (7) comprise wheel brackets with lifting columns (48) which are adjustable in height relative to the machine frame (8) by means of hydraulic cylinders for the purpose of adjusting the milling depth,
- where, as a minimum, the wheels (10, 12) or crawler tracks of the front axle (6) comprise wheel brackets (32) with pivoting columns (34) which are steerable about a pivoting axis (38) by means of steering levers (36),
- where the steering levers (36) of the wheels (10, 12, 14, 16) or crawler tracks of the front axle (6) are coupled to one another in an articulated fashion via a rigid connecting part (40) for synchronous adjustment of the steering angles, and
- where, as a minimum, one steering cylinder (44) directly or indirectly articulated at a fixed point (42) relative to the machine frame (8) and directly or indirectly coupled with, as a minimum, one wheel bracket (32) adjusts the steering angle of the wheels (10, 12) or crawler tracks,
**characterized in that**
the wheels (10, 12) or crawler tracks of the front axle (6) as seen in the direction of travel are arranged offset from one another in such a fashion that the wheel (10, 12) or crawler track located on the inside relative to the steering direction, or the wheel (12) or crawler track (6) located on the zero-clearance side (24) is arranged in front of the neighbouring wheel (10) or crawler track as seen in the direction of travel.

2. Device in accordance with claim 1, **characterized in that** the offset d between the pivoting axes (38) of the front axle (6) as seen in the direction of travel is between 50 mm and 350 mm, preferably between 100 mm and 250 mm.

3. Device in accordance with one of the claims 1 or 2, **characterized in that** the steering levers (36) are arranged at the pivoting columns (34) in different angular positions relative to the direction of travel in such a fashion that different maximum steering angles result for a steering direction to the right or to the left.

4. Device in accordance with one of the claims 1 to 3, **characterized in that**, for the wheel (12) or crawler track located on the zero-clearance side (24), the steering angle to the outside is adjustable up to a maximum steering angle in excess of 70°, preferably to between 70° and 90°.

5. Device in accordance with one of the claims 1 to 4, **characterized in that** the offset (d) of the wheels (10, 12) or crawler tracks of the front axle (6) is chosen in such a fashion that the wheels (10, 12) or crawler tracks, when adjusted to the maximum steering angle in a steering direction to the outside relative to the zero-clearance side (24), both essentially run in a single track.

6. Device in accordance with claim 1 to 5, **characterized in that** the wheel brackets (32) are coupled, via the connecting part (40), in such a fashion that, when steering to the outside relative to the zero-clearance side (24), the centre of rotation D of both front wheels (10, 12) or crawler tracks is arranged, in the vertical plane through the rear axle (7) or the extension of the same in the area of the rear wheel (16) or crawler track, close to the zero-clearance side.

7. Device in accordance with claim 6, **characterized in that** the wheel brackets are coupled via the connecting part (40) in such a fashion that, when steering to the outside relative to the zero-clearance side (24), the centre of rotation (D) exhibits a distance (c) from the front end of the milling drum (20) on the zero-clearance side of less than 250 mm, preferably less than 150 mm.

8. Device in accordance with one of the claims 1 to 7, **characterized in that** the wheel brackets (32) are coupled via the connecting part (40) in such a fashion that, when steering to the inside relative to the zero-clearance side (24), the centre of rotation (D) of both front wheels (10, 12) or crawler tracks exhibits, on the extension of the rear axle, a distance (b) from the inner front end of the milling drum (20) that is smaller than the wheelbase a, preferably smaller than 2000 mm.

9. Device in accordance with one of the claims 1 to 8, **characterized in that** the connecting part (40) forms a steering tie rod (30) together with an arm (50) projecting from the connecting part (40), where the arm (50) of said steering tie rod is coupled to the free end of the at least one steering cylinder (44).

10. Device in accordance with claim 9, **characterized in that** the arm (50) of the steering tie rod (30) extends between the pivoting columns (34) of the wheels (10, 12) or crawler tracks away from the connecting part (40), with the connecting part (40) and the steering cylinder (44) being arranged on opposite sides, as seen in the direction of travel, relative to the connecting line of the pivoting axes (38).

11. Device in accordance with claim 10, **characterized in that** the wheels (10, 12) or crawler tracks are steerable between two end positions for a direction of travel to the left or to the right, with the arm of the connecting part (40) exhibiting curved sections or cut-outs (52, 54) in such a fashion that, in the end positions, the connecting part (40) maintains a distance from the respective pivoting axis (38) that is larger than the radius of the respective pivoting column (34).

12. Device in accordance with one of the claims 1 to 11, **characterized in that** the pivoting columns (34) of, as a minimum, the front axle (6) are mounted in a cross member (56) or that the pivoting columns (34) are formed of lifting columns.

13. Device in accordance with claim 12, **characterized in that** the cross member (56) is pivotable, relative to the machine frame (8), about a swing axle extending in the direction of travel.

14. Device in accordance with one of the claims 1 to 13, **characterized in that** the rear wheel (16) or crawler track located on the zero-clearance side (24) is pivotable inwards, relative to the zero-clearance side (24), from an outer end position (26) in which the wheel (16) is beyond the zero-clearance side (24) and the rear axles (7) of both rear wheels (14, 16) are essentially in alignment, to an inner end position in front of the milling drum (20).

15. Method for steering the wheels (10, 12) or crawler tracks of a road milling machine for working road or ground surfaces,
in which the wheels (10, 12) or crawler tracks with wheel brackets (32) and pivoting columns (34) are pivoted, by at least one steering cylinder (44), about a pivoting axis (38) by means of steering levers (36), and the wheel brackets (32) of neighbouring support wheels (10, 12) or crawler tracks are coupled to one another in an articulated fashion for synchronous adjustment of the steering angles,
**characterized by**
the offset arrangement of the wheels (10, 12) or crawler tracks of the front axle as seen in the direction of travel in such a fashion that the wheel (10; 12) or crawler track located on the inside relative to the steering direction or the wheel (12) or crawler track of the front axle located on the zero-clearance side (24) is arranged in front of the neighbouring wheel (10) or crawler track of the front axle (6) as seen in the direction of travel.

## Revendications

1. Fraiseuse routière pour le traitement de surfaces de routes ou de sols,
- avec un bâti de machine (8) porté par un châssis, avec un essieu avant et un essieu arrière (6, 7) avec des roues (10, 12, 14, 16) ou des trains de chenilles,
- avec un tambour de fraisage (20) supporté en rotation par le bâti de machine (8) entre les roues (14, 16) ou trains de chenilles arrière, le tambour de fraisage (20) se terminant avec un côté frontal à peu près en affleurement avec un côté extérieur latéral du bâti de machine (8), ce qu'on appelle le côté zéro (24), pour permettre un fraisage le plus proche possible le long d'obstacles,
- au moins les roues (14, 16) ou trains de chenilles de l'essieu arrière (7) présentant des consoles de roue avec des colonnes de levage (48) qui peuvent être réglées en hauteur à l'aide de vérins hydrauliques pour le réglage de la profondeur de fraisage par rapport au bâti de machine (8),
- au moins les roues (10, 12) ou trains de chenilles arrière de l'essieu avant (6) présentant des consoles de roue (32) avec des colonnes de levage (34) qui peuvent être dirigées à l'aide de leviers de braquage (36) autour d'un axe de pivotement (38),
- les leviers de braquage (36) des roues (10, 12, 14, 16) ou trains de chenilles de l'essieu avant (6) étant couplés les uns aux autres de façon articulée par le biais d'une partie de raccordement (40) rigide pour le réglage synchrone des angles de braquage, et
- au moins un vérin de braquage (44) articulé directement ou indirectement sur un point fixe (42) par rapport au bâti de machine (8) et couplé indirectement ou directement à au moins une console de roue (32) réglant l'angle de braquage des roues (10, 12) ou trains de chenilles,
**caractérisée en ce que**
les roues (10, 12) ou trains de chenilles de l'essieu avant (6) sont disposé(e)s de façon décalée les un(e)s par rapport aux autres dans le sens de la marche de telle sorte que la roue (10, 12) ou respectivement le train de chenilles côté intérieur dans la direction de braquage ou la roue (12) ou le train de chenilles (6) situé(e) sur le côté zéro (24) est situé(e) devant la roue (10) ou respectivement le train de chenilles voisin(e) dans le sens de la marche.

2. Dispositif selon la revendication 1, **caractérisé en ce que** le décalage d dans le sens de la marche entre les axes de pivotement (38) de l'essieu avant (6) est compris entre 50 mm et 350 mm, de préférence entre 100 mm et 250 mm.

3. Dispositif selon l'une des revendications 1 ou 2, **caractérisé en ce que** les leviers de braquage (36) sont disposés sur les colonnes de pivotement (34) dans différentes positions angulaires en relation avec le sens de la marche de telle sorte qu' il en résulte des angles de braquage maximaux différents pour une direction de braquage vers la droite ou vers la gauche.

4. Dispositif selon l'une des revendications 1 à 3, **caractérisé en ce que** l'angle de braquage vers l'extérieur pour la roue (12) ou le train de chenilles situé(e) sur le côté zéro (24) peut être réglé jusqu'à un angle de braquage maximal de plus de 70°, de préférence entre 70° et 90°.

5. Dispositif selon l'une des revendications 1 à 4, **caractérisé en ce que** le décalage d des roues (10, 12) ou trains de chenilles de l'essieu avant (6) est choisi de telle sorte que, pour un braquage maximal dans une direction de braquage vers l'extérieur par rapport au côté zéro (24), les roues (10, 12) ou trains de chenilles se déplacent toutes deux/tous deux essentiellement sur une voie.

6. Dispositif selon les revendications 1 à 5, **caractérisé en ce que** les consoles de roue (32) sont couplées par le biais de la partie de raccordement (40) de telle sorte que, pour un braquage vers l'extérieur par rapport au côté zéro (24), le centre de rotation (D) des deux roues (10, 12) ou trains de chenilles avant est disposé dans le plan de vertical traversant l'essieu arrière (7) ou son prolongement dans la zone de la roue (16) ou du train de chenilles arrière près du côté zéro.

7. Dispositif selon la revendication 6, **caractérisé en ce que** les consoles de roue sont couplées par le biais de la partie de raccordement (40) de telle sorte que le centre de rotation (D), pour un braquage vers l'extérieur par rapport au côté zéro (24), présente une distance (c) au côté frontal côté zéro du tambour de fraisage (20) inférieure à 250 mm, de préférence inférieure à 150 mm.

8. Dispositif selon l'une des revendications 1 à 7, **caractérisé en ce que** les consoles de roue (32) sont couplées par le biais de la partie de raccordement (40) de telle sorte que, pour un braquage vers l'intérieur par rapport au côté zéro (24), le centre de rotation (D) des deux roues (10, 12) ou des trains de chenilles avant présente sur le prolongement de l'essieu arrière une distance (b) à l'arête frontale intérieure du tambour de fraisage (20) qui est plus faible que l'empattement a, de préférence inférieure à 2 000 mm.

9. Dispositif selon l'une des revendications 1 à 8, **caractérisé en ce que** la partie de raccordement (40) forme, conjointement avec un bras (50) dépassant de la partie de raccordement (40), un tirant de braquage (30) dont le bras (50) est couplé à l'extrémité libre du vérin de braquage (44) au moins au nombre de un.

10. Dispositif selon la revendication 9, **caractérisé en ce que** le bras (50) du tirant de braquage (30) s'étend entre les colonnes de pivotement (34) des roues (10, 12) ou des trains de chenilles à partir de la partie de raccordement (40), la partie de raccordement (40) et le vérin de braquage (44) étant, vus dans le sens de la marche, disposés sur des côtés opposés par rapport à la ligne de raccordement des axes de pivotement (38).

11. Dispositif selon la revendication 10, **caractérisé en ce que** les roues (10, 12) ou trains de chenilles peuvent être braqué(e)s entre deux positions extrêmes pour un sens de la marche vers la gauche ou respectivement vers la droite, le bras de la partie de raccordement (40) présentant des tronçons ou évidements (52, 54) courbés de telle sorte que la partie de raccordement (40) conserve dans les positions extrêmes une distance à l'axe de pivotement (38) respectif qui est plus grande que le rayon de la colonne de pivotement (34) respective.

12. Dispositif selon l'une des revendications 1 à 11, **caractérisé en ce que** les colonnes de pivotement (34) au moins de l'essieu avant (6) sont supportées dans une barre transversale (56), ou les colonnes de pivotement (34) sont formées de colonnes de levage.

13. Dispositif selon la revendication 12, **caractérisé en ce que** la barre transversale (56) peut, par rapport au bâti de machine (8), pivoter autour d'un axe oscillant placé dans le sens de la marche.

14. Dispositif selon l'une des revendications 1 à 13, **caractérisé en ce que** la roue (16) ou le train de chenilles arrière situé(e) sur le côté zéro (24) peut, à partir d'une position extrême (26) extérieure dans laquelle la roue (16) se trouve de l'autre côté du côté zéro (24) et les essieux arrière (7) des deux roues (14, 16) arrière sont essentiellement en affleurement l'un avec l'autre, pivoter dans une position extrême intérieure devant le tambour de fraisage (20) et vers l'intérieur par rapport au côté zéro (24).

15. Procédé de braquage de roues (10, 12) ou de trains de chenilles d'une fraiseuse routière pour le traitement de surfaces de routes et de sols,
dans lequel les roues (10, 12) ou les trains de chenilles avec des consoles de roue (32) et des colonnes de pivotement (34) sont pivoté(e)s autour d'un axe de pivotement (38) à l'aide de leviers de braquage (36) d'au moins un vérin de braquage (44), et des consoles de roue (32) de roues d'appui (10, 12) ou trains de chenilles voisine(s) sont couplées les unes aux autres de façon articulée pour le réglage synchrone des angles de braquage,
**caractérisé par**
la disposition décalée des roues (10, 12) ou trains de chenilles de l'essieu avant (6) dans le sens de la marche de telle sorte que la roue (10 ; 12) ou respectivement le train de chenilles côté intérieur dans le sens du braquage, ou la roue (12) ou respectivement le train de chenilles de l'essieu avant (6) situé(e) sur le côté zéro (24) est disposé(e) devant la roue (10) ou le train de chenilles voisin(e) de l'essieu avant (6).
